# EUROPÄISCHE PATENTSCHRIFT

(11) **EP 1 247 852 B1**
(45) Veröffentlichungstag und Bekanntmachung des Hinweises auf die Patenterteilung: **05.01.2005**
(21) Anmeldenummer: 02003017.7
(22) Anmeldetag: 12.02.2002
(51) Int. Cl.: C09J 5/00, C09K 3/10

(54) **Verfahren zum Abdichten einer Bördelnaht**
Method for sealing a edge-formed seam
Procédé d'étanchéification d'un joint à bords bridés

(30) Priorität: 04.04.2001 DE 10116721
(43) Veröffentlichungstag der Anmeldung: 09.10.2002
(73) Patentinhaber: Bayerische Motoren Werke Aktiengesellschaft, 80809 München (DE)
(72) Erfinder: Giese, Volker, Dr., 80337 München (DE)

(56) Entgegenhaltungen:
- EP-A- 0 254 870
- EP-A- 1 041 130
- DE-A- 3 540 520

## Beschreibung

Die Erfindung bezieht sich auf ein Verfahren der im Oberbegriff des ersten Anspruchs angegebenen Art.

Aus der gattungsbildenden EP 0 254 870 B ist es bekannt, bei Kraftfahrzeugteilen, wie Türen, Kofferraumhauben, Rückwandklappen, etc. ein Innenblech mit einem Außenblech über eine Falzverbindung zu verbinden. Diese Falzverbindung wird in der Regel durch Bördeln hergestellt.

Um Spaltkorrosion in der Bördelnaht zu verhindern, werden die beteiligten Bleche im Nahtbereich verklebt. Anschließend wird auf die so geklebte Bördelnaht eine Versiegelungsschicht aufgebracht, die zum einen den Bördelspalt vollständig verschließt und zum anderen die freie Blechkante mit einschließt.

Um zu verhindern, dass die beim Gelieren oder späteren Aushärten eingeschlossene Luft oder Gase, die durch das Entgasen bei der Erwärmung des Klebstoffes entstehen, durch das Versiegelungsmaterial nach außen treten oder im Versiegelungsmaterial als sichtbare Gasblasen eingeschlossen werden, wird in der gattungsbildenden Schrift vorgeschlagen, das Bauteil mit seiner Bördelnaht auf Geliertemperatur zu erwärmen und dann erst die Versiegelungsschicht auf die erwärmten Bleche aufzutragen. Anschließend wird dann mit Hilfe einer weiteren Wärmezufuhr eine Vorgelierung erreicht. Die später stattfindende Aushärtung - üblicherweise während des späteren Lacktrocknungsprozesses - führt dann auf gar keinen Fall mehr zu Blasenbildung.

Dieses Verfahren hat sich in der Praxis bewährt. Es ist jedoch vereinzelt vorgekommen, dass aufgrund der Erwärmung des vollständigen Bördelflansches ein starker Bauteilverzug beim Abkühlen aufgetreten ist, der in der Versiegelungsschicht zu Rissen und zu Qualitätseinbußen in der Klebstoffschicht im Bördelspalt führen kann.

Aufgabe des vorliegenden Verfahrens ist es deshalb, hier Abhilfe zu schaffen.

Diese Aufgabe wird erfindungsgemäß durch die Merkmale des ersten Anspruchs gelöst. Im Gegensatz zur gattungsbildenden Lehre wird nunmehr nicht mehr ein Klebstoff für die Versiegelungsschicht gewählt, der zum Vorgelieren erwärmt werden muss, sondern es wird ein Zweikomponenten-Klebstoff verwendet. Dieser Klebstoff reagiert in zwei Stufen, wobei als erste Reaktion eine chemische Zweikomponenten-Reaktion stattfindet, die zu einem auswaschbeständigen und grifffesten Produkt führt. Hierbei läuft diese Reaktion bei Raumtemperatur oder mit leichter Erwärmung ab, die bevorzugt (Anspruch 3) auf 60°C bis 120°C durchgeführt wird. Die Erwärmung kann induktiv (Anspruch 2) oder auch durch IR-Strahlung erfolgen. Erwärmt werden kann die Bördelnaht oder der Klebstoff nach Auftragung. Diese Temperatur ist hierbei deutlich niedriger als bei den bisher verwendeten PVC-Klebstoffen, so dass weder Gasblasen oder Lufteinschlüsse zu Qualitätsverlusten führen können, noch können bei diesen Temperaturen die teilweise beobachteten Bauteilverzüge eintreten.

Die zweite ebenfalls chemische Reaktion findet gemäß Anspruch 4 im Grundierungsofen statt. Hierbei können dann auch die restlichen Ziehöle aufgenommen werden, so dass die Korrosionsbeständigkeit der die Bördelnaht bildenden Bleche gewährleistet ist. Bei dieser Wärmebehandlung kann eine Blasenbildung durch eingeschlossene Luft oder durch ausgasenden Klebstoff, der vor dem Bördeln auf die beteiligten Bleche im Bördelnahtbereich aufgetragen wird, vermieden werden, da der vorgehärtete Klebstoff aufgrund der ersten Reaktion bereits genügend Widerstand gegen die entstehenden Drücke bildet.

Durch das erfindungsgemäße Verfahren ist es möglich, auf die Erwärmung des Bauteiles ganz oder partiell im Bördelnahtbereich zu verzichten oder diese Erwärmung so niedrig auszuführen, das ein Bauteilverzug mit Sicherheit ausgeschlossen ist.

Im folgenden wird die Erfindung anhand eines bevorzugten Ausführungsbeispiels kurz erläutert. Es stellen dar:

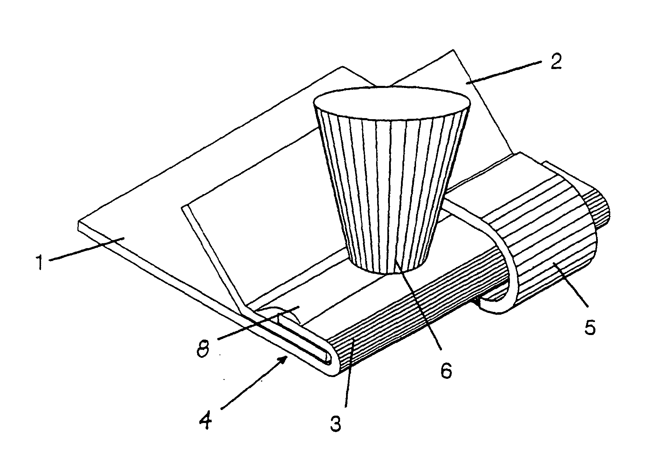

In der einzigen Figur wird als Beispiel ein Außenblech 1 mit einem Innenblech 2 verbunden. Hierzu wird das Außenblech 1 in seinem Randbereich 3 um 180° gebördelt, so dass der Randbereich des Innenbleches umfasst wird.

Vor dem Bördelvorgang wird auf dem Innenblech oder auf dem umzubördelnden Randbereich 3 des Außenbleches ein Kunststoff als Klebstoff aufgetragen. Als Kunststoffe kommen vornehmlich PVC-Plastisole, Epoxiharze, Acrylat-Plastisole oder Kunstkautschuke in Betracht.

Nach dem Bördeln wird mit Hilfe einer Auftragsdüse 6 die Versiegelungsschicht aus einem zweikomponentigen Klebstoff aufgetragen. Im vorliegenden Beispiel wird unmittelbar vor dem Auftrag die Bördelnaht induktiv durch einen Induktor 5 erwärmt. Unmittelbar bedeutet in diesem Zusammenhang, dass ein zügiger Auftrag der Versiegelungsschicht nicht behindert wird, aber sichergestellt ist, dass der zu versiegelnde Bereich auf eine Temperatur erwärmt wurde, die eine erste Reaktion des zweikomponentigen Klebstoffes gewährleistet. Dieser Temperaturbereich bewegt sich zwischen 60°C und 120°C. Dadurch erfolgt der Auftrag der Versiegelungsschicht auf die erwärmte Bördelnaht 4, so dass ein auswaschbeständiges und grifffestes Produkt in kurzer Zeit erzielt wird. Damit ist ohne Unterbrechung eine Weiterbehandlung der beteiligten Bleche möglich.

Daneben ist es - je nach Zusammensetzung des Klebstoffs - auch denkbar, dass der Auftrag und die erste Reaktion des zweikomponentigen Klebstoffs bei Raumtemperatur abläuft oder der Klebstoff nach Auftrag erwärmt wird.

Die Aushärtung der Versiegelungsschicht geschieht dann in einem Grundierungsofen, wenn die beteiligten Bleche beispielsweise Bauteile einer Kraftfahrzeugkarosserie sind. Andernfalls kann die Aushärtung auch in einem beliebigem anderen Ofen erfolgen, beispielsweise in einem Lacktrocknungsofen, wenn die beteiligten Bauteile nach der Versiegelung lackiert werden.

Wesentlich bei der Durchführung der Erfindung ist es, dass bei der Einleitung der ersten Reaktionsstufe die Bauteile nur auf Raumtemperatur oder höchstens auf 120°C vorgewärmt werden müssen, auf eine Temperatur also, bei der kein Bauteilverzug eintritt.

Es sei noch darauf hingewiesen, dass als zweikomponentige Klebstoffe alle Klebstoffe infrage kommen, die in zwei Stufen jeweils chemisch reagieren.

## Patentansprüche

1. Verfahren zum Abdichten einer Bördelnaht, gebildet aus zwei Blechen, mittels einer Versiegelungsschicht, die aus einem gelier- und/oder härtbarem Material besteht und auf die Bördelnaht aufgetragen und anschließend durch eine Wärmebehandlung ausgehärtet wird,
**dadurch gekennzeichnet, dass** als Material ein Zweikomponenten-Klebstoff verwendet wird, dessen erste Reaktionsstufe bei Raumtemperatur oder mit Hilfe leichter Erwärmung zumindest eingeleitet wird.

2. Verfahren nach Anspruch 1,
**dadurch gekennzeichnet, dass** die leichte Erwärmung der Bördelnaht oder des Klebstoffs induktiv erfolgt.

3. Verfahren nach Anspruch 1 oder 2,
**dadurch gekennzeichnet, dass** die leichte Erwärmung auf eine Temperatur von 60°C bis 120°C erfolgt.

4. Verfahren nach einem der vorangegangenen Ansprüche,
**dadurch gekennzeichnet, dass** die Wärmebehandlung zum Aushärten im Grundierungsofen stattfindet.

## Claims

1. A method for sealing an edge-formed seam, formed from two metal sheets, by means of a sealing layer which comprises a gelling and/or curable material and is applied to the edge-formed seam and then cured by a heat treatment,
**characterised in that** a two-component adhesive is used as the material, the first reaction stage of which is at least initiated at room temperature or with the aid of gentle heating.

2. A method according to claim 1,
**characterised in that** the gentle heating of the edge-formed seam or the adhesive takes place in an inductive manner.

3. A method according to claim 1 or claim 2,
**characterised in that** the gentle heating is to a temperature of 60°C to 120°C.

4. A method according to any one of the preceding claims,
**characterised in that** the heat treatment for curing takes place in the primer oven.

## Revendications

1. Procédé d'étanchéification d'un joint à bords sertis, constitué de deux tôles, à l'aide d'une couche imperméabilisante, qui se compose d'un matériau pouvant être figé et/ou durci, et qui est appliquée sur le joint à bords sertis et ensuite durcie par un traitement thermique,
**caractérisé en ce que**
comme matériau on utilise un adhésif à deux composants, dont le premier niveau de réaction est mis en oeuvre au moins à la température ambiante ou à l'aide d'un léger chauffage.

2. Procédé selon la revendication 1,
**caractérisé en ce que**
le léger chauffage du joint à bords sertis ou de l'adhésif s'effectue par induction.

3. Procédé selon la revendication 1 ou 2,
**caractérisé en ce que**
le léger chauffage s'effectue à une température comprise entre 60 °C et 120 °C.

4. Procédé selon l'une des revendications précédentes,
**caractérisé en ce que**
le traitement thermique pour le durcissement s'effectue dans un four de laquage.
